Europäisches Patentamt

European Patent Office

Office européen des brevets

(11) Veröffentlichungsnummer: **0 203 251**
A2

## EUROPÄISCHE PATENTANMELDUNG

(21) Anmeldenummer: 86100590.8

(22) Anmeldetag: 17.01.86

(51) Int. Cl.⁴: **C 09 J 3/14, C 08 L 23/08**

(30) Priorität: 18.01.85 DE 3501594

(43) Veröffentlichungstag der Anmeldung: 03.12.86
Patentblatt 86/49

(84) Benannte Vertragsstaaten: CH DE FR LI NL

(71) Anmelder: **Planatolwerk Willy Hesselmann Chemische und Maschinenfabrik für Klebetechnik GmbH & Co. KG, D-8200 Rosenheim 2 (DE)**

(72) Erfinder: **Koller, Hubert, Auer Strasse 50, D-8201 Altenbeuern (DE)**

(74) Vertreter: **Freiherr von Pechmann, Eckehart et al, Patentanwälte Wuesthoff- v. Pechmann-Behrens-Goetz Schweigerstrasse 2, D-8000 München 90 (DE)**

(54) **Schmelzklebstoff zum Buchbinden.**

(57) Ein Schmelzklebstoff aus bestimmten Anteilen von Klebharz, Ethylen/Vinylacetat-Copolymer, Ethylen/Butylacrylat-Copolymer und/oder Polyolefin eignet sich besonders gut zur Klebebindung von Papierblöcken und zum Beleimen fadengehefteter Bücher, die sich ohne Brechen um 180° aufschlagen lassen.

EP 0 203 251 A2

PATENTANWÄLTE
# WUESTHOFF - v. PECHMANN - BEHRENS - GOETZ
EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 2 71 60 63 (III)

0203251

PLANATOLWERK
WILLY HESSELMANN
EP-59 988

*BEZEICHNUNG GEÄNDERT*
*siehe Titelseite*

## Schmelzklebstoff zum Klebebinden von Papierblöcken und Beleimen fadengehefteter Bücher.

Bei der Herstellung von Büchern, Broschüren, Zeitschriften und Katalogen ersetzt die Klebebindung in verstärktem Maße die früher übliche Faden- und Drahtheftung der Papierseiten. Durch das Bestreichen des gestapelten Papier- oder Buchblöcke mit einer Klebstoffschicht wird eine feste Haftung der Papierblätter an einer Seite des Papierstapels oder -blocks erreicht. Besonders geeignet sind hierfür Schmelzklebstoffe, die eine gute Blattkantenhaftung bewirken und z.B. im "one shot-Verfahren" aufgestrichen oder aufgewalzt werden können.

Als Schmelzklebstoffe (Hot melt-Klebstoff) eignen sich besonders lösungsmittelfreie Klebstoffmassen, die in der Wärme, d.h. im flüssigen Zustand, die Blockrücken gut benetzen und an diesen nach dem Erkalten und Erstarren fest anhaften, z.B. Kolophonium/Wachs-Gemische. Die bekannten besten Schmelzklebstoffe für die Buchherstellung bestehen im wesentlichen aus einem Gemisch von Ethylen/Vinylacetat-Copolymer, Klebharzen und einem Wachs- bzw. Paraffinzusatz. Durch diesen Wachsanteil erreicht man eine Einstellung des Schmelzindex sowie der Viskosität des geschmolzenen Klebstoffs auf den gewünschten Viskositätswert. Außerdem wird hierdurch die Elastizität der erstarrten Masse beeinflußt und besonders auch die Schnittfähigkeit der Klebung sichergestellt. Beim Fehlen der Wachs-Komponente wird nämlich bei den bisher verwendeten Klebstoffkombinationen bei der weiteren Bearbeitung des Buchblocks ein Verschmieren der Schneidmesser beobachtet, so daß der 3-Seiten-Beschnitt sowie die folgenden Bearbeitungsschritte bei der In-line-Produktion in
der Buchherstellung gestört werden. Daher wurde bei den synthetischen Schmelzklebstoffen für die Herstellung von Büchern
und dgl. dieser Wachs- oder Paraffinzusatz als essentiell angesehen.

Die in den bekannten Klebern verwendeten Ethylen/Vinylacetat-
Copolymertypen weisen einen relativ hohen Anteil an Vinylacetat
auf und ergeben eine hohe Klammerwirkung, wodurch die Klebung
zwar sehr fest haftend aber auch relativ hart und spröde ist
mit der Folge, daß sich die Bücher oder Broschüren nicht ohne
Bruch flach , d.h. um 180°, aufschlagen lassen, wie dies gerade
bei Taschenbüchern, Zeitschriften und Broschüren erwünscht ist.

Schmelzkleber für das Buchbinden auf der Basis eines Ethylen/-
Vinylacetat-Copolymeren und einer Harzkomponente, die in erster
Linie Kolophonium ist, sind in großem Umfang im Einsatz. So ist
aus der DE-OS 20 15 979 eine Klebstoffmasse für die Herstellung
von Büchern bekannt, welche 20 bis 40 Gew.-% obiger Copolymeren, 15 bis 45 Gew.-% eines Klebe-Harzes, 5 bis 15 Gew.-% Polyethylen mit einer Dichte zwischen 0,91 und 0,96 g/cm³ und einem
Schmelzindex zwischen 1 und 200 enthalten und als essentielle
Komponenten ein Verdünnungsmittel in einer Menge von 10 bis 40
Gew.-% vorhanden sein muß. Dieses Verdünnungsmittel kann folgende Stoffgruppen umfassen: 1. flüssiges Polybutylen mit einem
Molekulargewicht von 600 bis 3000, 2. Erdölwachse, wie Paraffinwachs oder mikrokristallines Wachs, 3. Polyethylenfette
oder -wachse, 4. hydrierte tierische und pflanzliche Fette und
Öle und 5. synthetische Wachse, wie aus der Fischer-Tropsch-
Synthese erhaltene Produkte. Nachteilig bei diesen bekannten
Schmelzklebern ist, daß diese Verdünnungsmittelkomponente Ursache einer langsamen Härtung der Klebebindung ist und damit zu
einem kostspieligen Zeitverlust in der Produktionslinie führt,
und es darüber hinaus zu einem Ausschwitzen dieser Produkte im
Laufe der Zeit aus dem Buchrücken mit allen damit verbundenen
bekannten Nachteilen kommen kann.

Aus der US-PS 38 49 353 ist ein Schmelzkleber für die Buchbinderei auf der Basis eines Ethylen/Vinylacetat- und/oder Alkylacrylat-Copolymeren und ataktischem Polypropylen bekannt, der jedoch zusätzlich 10 bis 50 Gew.-% eines vulkanisierten Gummis enthält, wobei das Ausmaß der Vulkanisation des Gummis abhängt von den angestrebten Produkt-Eigenschaften und dem Molekulargewicht des Kautschuks. Für niedere Viskositäten wird ein Gummi mit niederem Vulkanisationsgrad eingesetzt. Die dort erreichbaren Viskositäten der Schmelzkleber sind jedoch derart hoch, daß sich ein solcher Kleber nicht auf üblichen Einrichtungen für das Beleimen von Block-Rückseiten zur Herstellung von Büchern, Zeitschriften und Broschüren eignet, sondern eine vollständige Umstellung der Anlage auf ein Extrudierverfahren erforderlich macht.

Aufgabe der Erfindung ist nun ein Schmelzklebstoff für Klebebindung von Papierblöcken und das Beleimen fadengehefteter Bücher auf üblichen Anlagen, welcher nicht die mit wachs- oder paraffinhaltigen Klebebindern verbundenen Nachteile besitzt, sondern eine stabile über lange Zeit unveränderte Klebebindung ergibt, und der auch so schnell abbindet, daß bei maschineller Produktion ein ungebührlicher Zeitaufwand für die Verfestigung der Klebebindung vermieden ist.

Diese Aufgabe wird durch die im Hauptanspruch angegebenen Schmelzklebstoffe gelöst. Besondere Ausgestaltungsformen der erfindungsgemäßen Schmelzklebstoffe sind in den Unteransprüchen angegeben. Mit den erfindungsgemäßen Schmelzklebstoffen läßt sich eine wesentlich festere und außerordentlich gut haftende Klebebindung der Blockrücken erreichen, welche ein vielfaches Aufschlagen des Buchs oder der Zeitschrift aufgrund der Elastizität der Klebebindung nicht nur bis 180° sondern bis 360°, ohne daß es zu einem Bruch im Rücken kommt, gestattet.

Die Harzkomponente des erfindungsgemäßen Schmelzklebstoffs ist bevorzugt ein Kohlenwasserstoffharz, Terpenharz, Styrolharz, übliche Kolophonium-Derivate, z.B. Ester mit ein- oder mehrwertigen Alkoholen, sowie auch entsprechende Tallharz-Derivate
oder deren Gemische und gegebenenfalls noch zusätzlich eine
bestimmte Menge an Balsamharz oder Kolophonium, wobei jedoch
der Anteil dieser polaren Harze nicht mehr als 50 Gew.-% der
Harzkomponente betragen soll.

Trotz des Fehlens des üblichen Wachs- oder Paraffinzusatzes
wird mit dem erfindungsgemäßen Schmelzklebstoff unter Verwendung von Ethylen/Vinylacetat-Copolymeren (EVA-) mit einem
relativ niedrigen Vinylacetatanteil - der Gesamtvinylacetatanteil der EVA-Copolymeren sollte 20 % nicht übersteigen -
und/oder von Propylen oder Polybutylen niederer Dichte die
Haftung am Blockrücken wesentlich verbessert, so daß ein
Aufschlagen bis zu 360° möglich ist. Auch bei mit mineralischen
Füllstoffen und Bindemitteln maschinengestrichenen Papieren,
wie Kunstdruckpapier, und gußgestrichenen und kalanderten Papieren, einschließlich Bibeldruckpapier, wird eine sehr feste
Haftung der Blockrücken erreicht. Da es nun nicht mehr notwendig ist, die Blöcke, wie bisher bei manchen Papiersorten für
Schmelzklebstoffe erforderlich, nachzubearbeiten, tritt auch
keine Verdickung des Blocks am Rücken ein. Obwohl der erfindungsgemäße Kleber in geringer Menge verwendet werden kann,
wird eine festere und stärker beanspruchbare Bindung erreicht.

Der erfindungsgemäße Schmelzkleber hat die übliche einstellbare
Viskosität von ca. 2000 bis 6000 mPa·s bei den üblichen Verarbeitungstemperaturen von 150 bis 180°C, so daß er in üblichen
Anlagen ohne besondere Maßnahmen eingesetzt werden kann.

Der erfindungsgemäße Schmelzklebstoff eignet sich auch für
schwer zu bearbeitbare Materialen, wie PVC, Polyethylen,
Polypropylen, um diese mit dem Papier zu verkleben, so daß auch
in einfacher Weise der Buchrücken an solchen Decken fixiert
werden kann.

Der erfindungsgemäße Schmelzklebstoff zeichnet sich durch eine
gute Wärme- und Alterungsbeständigkeit aus. Eine Wachskomponente kann nicht migrieren oder ausschwitzen,da sie nicht
vorhanden ist, so daß auch nach langer Zeit und Lagerung bei
höheren Temperaturen keine Änderung der Eigenschaften der
Klebebindung eintritt. Die Klammerwirkung bei dem erfindungsgemäß verwendeten Kleber ist so gut, daß auch bei häufigem
Aufschlagen des Buchs kein Bruch im Rücken eintritt, so daß
dadurch keine Beschädigung eintritt. Die Klebebindung entspricht der mit einem Dispersions-Klebstoff erhältlichen,
jedoch ohne deren Nachteil der langsamen Abbindung oder Härtung
durch Verdunstung des Wassers.

In manchen Fällen ist es zweckmäßig, daß in dem erfindungsgemäßen Schmelzklebstoff ein Teil des Ethylen/Vinylacetat-Copolymeren durch Ethylen/Butylacrylat-Copolymer ersetzt ist,
jedoch soll dieses höchstens 50 Gew.-% der Copolymeren ausmachen.

Wie erwähnt, eignet sich der erfindungsgemäße Schmelzklebstoff
auch besonders zum Beleimen des Blockrückens bei der Herstellung von fadengehefteten Büchern. Das Fadenheften geschieht
auch heute noch bei Büchern aus relativ starkem Papier für
starke Beanspruchung.

Die Erfindung wird anhand nachfolgender Beispiele noch näher
erläutert. In diesen Beispielen bedeutet: EVA = Ethylen/Vinylacetat-Copolymer; VAc = Vinylacetat; BA = Butylacrylat und MI =
Schmelzindex. Die Schmelzviskosität (mPa·s) wurde bei 170°C mit
dem Epprecht Rheomat 15 System C bestimmt.

**B e i s p i e l      1**

70 kg EVA mit einem Gesamtanteil von 20 % VAc in Form eines
Gemischs von 28 kg EVA mit 28 % VAc (MI ca. 150 g/10 min) und
42 kg EVA mit 14 % VAc (MI ca. 2600 g/10 min) wurden in der
Wärme mit 20 kg Kohlenwasserstoffharz (hydriert, polycyclisch)
und 10 kg Kolophonium-Glycerinester homogen vermischt.

Der so erhaltene Schmelzklebstoff besaß eine Viskosität von ca.
5500 mPa·s.

In den nachfolgenden Beispielen wurden in gleicher Weise durch
Vermischen der geschmolzenen Komponenten erfindungsgemäße
Schmelzklebstoffe hergestellt.

**B e i s p i e l      2**

60 kg EVA mit 14 % Vac (MI ca. 2600 g/10 min)
10 kg EVA mit 28 % Vac (MI ca.  150 g/10 min)
30 kg aliphatisches-aromatisches Kohlenwasserstoffharz

Viskosität: ca. 3000 mPa·s

**B e i s p i e l      3**

40 kg EVA mit 14 % Vac (MI ca. 2600 g/10 min)
30 kg Ethylen-Butylacrylat 20 % BA (MI ca. 200 g/10 min)
30 kg modifiziertes Terpenharz /Erweichungspunkt: 105°C (R&K);
       mittleres Molekulargewicht: ca. 600/

Viskosität: ca. 12500 mPa·s

0203251
EP-59 988

**B e i s p i e l    4**

50 kg EVA mit 19 % VAc (MI ca. 500 g/10 min)
18 kg EVA mit 14 % VAc (MI ca. 2600 g/10 min)
30 kg hydriertes, polycylsiches Kohlenwasserstoffharz
 2 kg Weichmacher auf Phthalatbasis

Viskosität: ca. 6000 mPa·s

**B e i s p i e l    5**

35 kg EVA mit 19 % VAc (MI ca. 500 g/10 min)
10 kg EVA mit 14 % VAc (MI ca. 2600 g/10 min)
30 kg hydriertes, polycyclisches Kohlenwasserstoffharz
25 kg ataktisches Polypropylen

Viskosität: ca. 3000 mPa·s

**B e i s p i e l    6**

30 kg EVA mit 19 % Vac (MI ca. 500 g/10 min)
28 kg EVA mit 14 % VAc (MI ca. 2600 g/10 min)
20 kg Terpenharz
20 kg hydriertes, polycyclisches Kohlenwasserstoffharz
 2 kg Weichmacher auf Phthalatbasis

Viskosität: ca. 5500 mPa·s

**B e i s p i e l    7**

70 kg ataktisches Polypropylen; Viskosität
      bei 180°C  2000 mPa·s (Haake Rotovisko Typ RV3)
30 kg hydriertes, polycyclisches Kohlenwasserstoffharz

Viskosität: ca. 450 mPa·s

**B e i s p i e l     8**

75 kg ataktisches Polypropylen; Schmelzviskostät bei 190°C
     (Rotationsviskosimeter) ca. 2500 mPa·s , Erwichungspunkt:
     ca.125°C (R&K)
25 kg hydriertes, polycyclisches Kohlenwasserstoffharz

Viskosität: 2200 mPa·s

**B e i s p i e l     9**

85 kg ataktisches Polypropylen (wie in Beispiel 8)
15 kg hydriertes, polycylisches Kohlenwasserstoffharz

Viskosität: ca. 3000 mPa·s

8120

9

PLANATOLWERK
WILLY HESSELMANN
EP-59 988

Patentansprüche :

1. Schmelzklebstoff zur Klebebindung von Papierblöcken und Beleimen fadengehefteter Bücher aus 15 bis 6o Gew.-% Klebeharz, 0 bis 85 Gew.-% Ethylen/Vinylacetat-Copolymerem mit einem Gesamt-Vinylacetat-Anteil von 1 bis 20 Gew.-% , wobei dieses Copolymere bis zu höchstens 50 Gew.-% durch ein Ethylen/Butylacrylat-Copolymer ersetzt sein kann, und 0 bis 85 Gew.-% Polypropylen oder -butylen niederer Dichte.

2. Schmelzklebstoff nach Anspruch 1,
dadurch gekennzeichnet,
daß das Klebeharz ein Kohlenwasserstoffharz, Terpenharz, Styrolharz, Kolophonium-Derivat, Tallharz-Derivat oder deren Gemische ist und gegebenenfalls noch Balsamharz oder Kolophonium enthält, wobei der Anteil dieser polaren Harze nicht mehr als 50 Gew.-% der Harzkomponente beträgt.

3. Schmelzklebstoff nach Anspruch 1 oder 2,
dadurch gekennzeichnet,
daß das Polypropylen ein ataktisches Homo- oder Copolypropylen ist.

8129